# EUROPEAN PATENT APPLICATION

(11) **EP 3 792 888 A2**
(43) Date of publication of application: **17.03.2021**
(21) Application number: 20195305.6
(22) Date of filing: 09.09.2020
(51) Int. Cl.: G08B 1/08, G08B 21/02, G08B 25/00

(54) **ELECTRONIC SHUTDOWN DEVICE AND METHOD FOR SHUTTING DOWN A DEVICE**

(30) Priority: 10.09.2019 DE 102019124230
(71) Applicant: Infineon Technologies AG, 85579 Neubiberg (DE)
(72) Inventor: ISMAIL, Mahmoud, 81548 München (DE); ZOTES, Mario Alejandro, 81669 München (DE); HOLLFELDER, Manuel, 81673 München (DE)
(74) Representative: Lambsdorff & Lange Patentanwälte Partnerschaft mbB

(57) **Abstract**

An electronic shutdown device comprises an acoustic sensor configured to detect an acoustic signal of a signaling device, a logic circuit configured to distinguish the acoustic signal from other sounds, and a trigger configured to output a shutdown signal once the logic circuit has detected the acoustic signal.

## Description

### TECHNICAL FIELD

The present disclosure concerns an electronic shutdown device and a method for shutting down a device.

### BACKGROUND

The danger of fires, the leaking of toxic gases or chemicals or other hazardous substances, e.g. in buildings, apartments, tunnels, tents, etc., can be reduced by using signaling devices, e.g. smoke detectors, gas detectors, heat detectors, etc. However, this requires that the cause of the hazard, e.g. the cause of the fire, is tackled quickly once a signaling device has sounded an alarm. Due to their sensitivity, signaling devices can for example be triggered already at a stage when no fire has broken out yet but when there is an increased smoke development. This can be the case, for example, when heating cooking oil on a stove. Only through the continued effect of heat does a fire actually break out. However, if the heat effect is interrupted in time after the signaling device has been triggered, a fire can be prevented. A timely reaction may not be possible, however, if the interruption of the heat effect requires human intervention, e.g. because there is no one present who could hear the signaling device and react. Even if the triggering of the signaling device is registered, the limited human reaction time can have a negative effect. Improved electronic shutdown devices and improved methods for shutting down a device can help with solving these and other problems.

The problem underlying the invention is solved by the features of the independent claims. Advantageous features and further developments of the invention are indicated in the dependent claims.

### SUMMARY

Individual examples relate to an electronic shutdown device comprising: an acoustic sensor configured to detect an acoustic signal of a signaling device, a logic circuit configured to distinguish the acoustic signal from other sounds, and a trigger configured to output a shutdown signal once the logic circuit has detected the acoustic signal.

Individual examples relate to a method for shutting down a device, the method comprising: detecting by means of an acoustic sensor an acoustic signal of a signaling device; distinguishing by means of a logic circuit the acoustic signal from other sounds; and outputting by means of a trigger a shutdown signal once the logic circuit has detected an acoustic signal.

### BRIEF DESCRIPTION OF THE DRAWINGS

The attached drawings show examples and serve, together with the description, to explain the basic principles of the disclosure. The elements of the drawings are not necessarily true to scale. Identical reference numbers may indicate corresponding, similar or identical parts.
Figures 1A and 1B show a schematic view of electronic shutdown devices comprising an acoustic sensor, a logic circuit and a trigger.
Figure 2 shows a side view of another electronic shutdown device comprising a carrier on which the components of the electronic shutdown device are arranged.
Figure 3 comprises Figures 3A to 3D and shows further examples of electronic shutdown devices arranged in different ways relative to a device to be shut down.
Figure 4 shows another electronic shutdown device that includes a memory.
Figure 5 shows another electronic shutdown device comprising two units that can communicate wirelessly with each other.
Figure 6 shows an operation of an electronic shutdown device according to an example.
Figure 7 is a flow chart of a method for shutting down a device.

### DETAILED DESCRIPTION

The following detailed description refers to the drawings and the examples shown in them. However, it is obvious to a person skilled in the art that one or more aspects of disclosure can be carried out with a lower degree of specific detail. In other cases, known structures and elements are shown in schematic form to facilitate a description of one or more aspects of disclosure.

Although a particular feature or aspect of an example may be disclosed in relation to only one of several implementations, such feature or aspect may also be combined with one or more other features or aspects of the other implementations as may be desirable and beneficial for any given or particular application, unless specifically stated otherwise or unless there is a technical limitation. Where the terms "contain", "have", "with" or other variations thereof are used, either in the detailed description or in the claims, these terms should further have an inclusive meaning similar to the term "include".

It is understood that the characteristics of the various examples described herein may be combined, unless specifically stated otherwise.

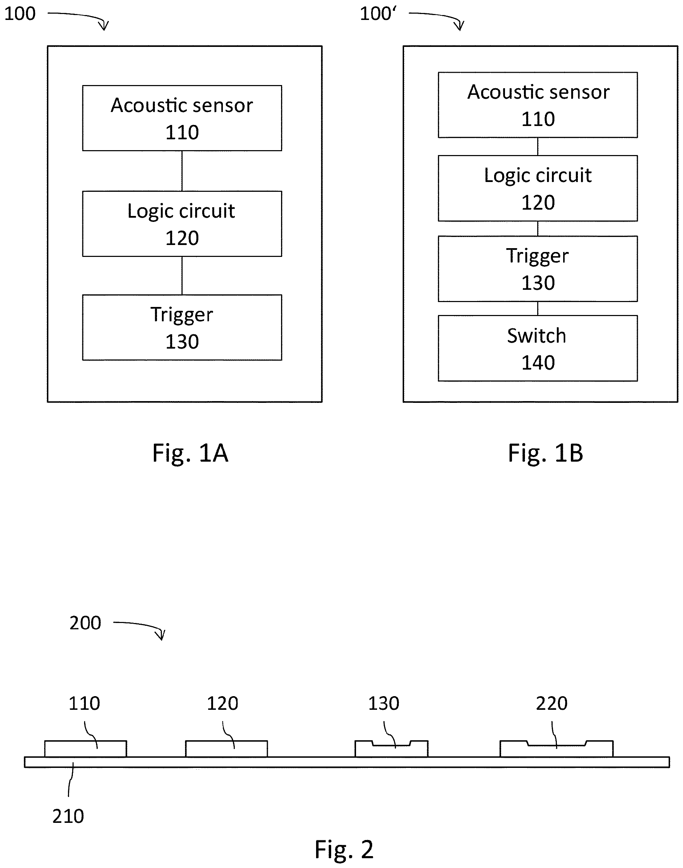

Figure 1 shows an electronic shutdown device 100 comprising an acoustic sensor 110, a logic circuit 120 and a trigger 130.

The acoustic sensor 110 is configured to detect an acoustic signal from a signaling device, the logic circuit 120 is configured to distinguish the acoustic signal from other sounds, and the trigger 130 is configured to output a shutdown signal once the logic circuit 120 has detected the acoustic signal.

A signaling device can be a smoke detector, for example. More generally, a signaling device can also be a warning unit which is configured to output a signal once a source of danger has been detected. Such a source of danger can be, for example, a heat development, an increase in radiation, the leaking of toxic or environmentally harmful vapors or liquids, etc.

The logic circuit 120 can be configured to detect a warning sound from a signaling device, wherein the warning sound warns of smoke development. However, the logic circuit 120 can also be configured to detect other types of acoustic signals from a signaling device, e.g. a warning of gases or gas concentrations, such as CO₂, CO, methane, temperatures or temperature changes, liquids, or a warning of a low battery level of the signaling device.

The electronic shutdown device 100 can be used, for example, to switch off an electrical device, such as a kitchen device such as a cooker, oven, microwave, toaster or electric radiant heater, or a fuel-operated device such as a gas cooker, gas grill, heater or radiator, when a signaling device emits the acoustic signal. The electronic shutdown device 100 can be used, for example, to switch off a heat source when a signaling device emits an acoustic signal. Furthermore, the electronic shutdown device 100 can be used, for example, to close a valve to prevent further flow of gas or liquid, if, for example, a fire or a leak is detected and a signal is output by a signaling device. The shutdown device can also be part of a valve or fuse.

The electronic shutdown device 100 may, for example, be configured to help disconnect an electrical device from the mains or a power source, or to disconnect a fuel (e.g. gas or oil) operated device from the fuel supply. This disconnecting may involve, for example, disconnecting the power supply or closing a fuel valve.

According to an example, the shutdown device 100 may itself have a switch which is used to disconnect or establish the power supply or to close or open the valve. In another example, the shutdown device 100 is only configured to transmit the shutdown signal to a switch that is not part of the shutdown device 100 itself. The switch may include a relay, MOSFET or any other suitable switching functionality.

The danger of a dangerous fire can be reduced by using the electronic switch-off device 100 to switch off a device that is a heat source. For example, a signaling device can emit a warning sound if smoke develops due to excessive heat (e.g. when cooking oil on a stove), but no fire has broken out yet. Immediately switching off the heat source (in this case the stove) without human intervention stops further heat development and can thus prevent a fire from breaking out.

The acoustic sensor 110 of the electronic shutdown device 100 can be any suitable acoustic sensor, for example a microphone, especially a silicon microphone.

The logic circuit 120 can be, for example, a digital or an analog logic circuit. The logic circuit 120 can be realized e.g. in a microprocessor, a machine learning IC, an ASIC or in any suitable semiconductor system. According to an example, a logic circuit can also comprise an evaluation unit, in particular an evaluation unit which can comprise a processor. This may allow statistical evaluations to influence the behaviour of the shutdown device. One or more known patterns which can be fed to the logic circuit can be stored in a memory.

Trigger 130 can comprise any signal output that is suitable for outputting the shutdown signal. For example, the Trigger 130 can be configured to output an electrical shutdown signal, a wireless shutdown signal or an optical shutdown signal. The Trigger 130 can therefore be connected, for example, by wire or in a wireless manner to the above-mentioned switch for disconnecting or establishing the power supply or fuel supply.

According to an example, the electronic shutdown device 100 may be configured to control the power supply or valve itself. This means that the power supply can be on or the valve can be open when the electronic shutdown device 100 is on and the power supply can be off or the valve can be closed when the electronic shutdown device 100 is off. In this case, the electronic shutdown device 100 itself can be configured to be shut down by the shutdown signal, thereby interrupting the power supply or closing the valve.

Figure 1B shows an electronic shutdown device 100' which may be identical to the electronic shutdown device 100, except that the electronic shutdown device 100' further comprises a switch. The switch 140 may be configured to trigger an activation or deactivation of the electronic shutdown device 100' and/or the device to be shut down. Switch 140 may be user-controlled or timer-controlled. For example, a user-controlled switch 140 may include a button that allows a user to re-enable the electronic shutdown device 100'. For example, a user-controlled switch 140 may be configured to allow a user to actuate the switch 140 when the shutdown signal is present (the presence of the shutdown signal may be indicated to the user by a warning light and/or a warning signal). A timer-controlled switch 140 may, for example, include a timer circuit which restarts the electronic shutdown device after a specified time or at a specified time.

Figure 2 shows an electronic shutdown device 200, which may be similar to or identical with the electronic shutdown devices 100 and 100'.

The electronic shutdown device 200 is designed as a semiconductor module comprising a carrier 210 and components mounted thereon. The carrier 210 may, for example, comprise a printed circuit board (PCB). The components may be electrically connected to each other by conductor tracks of the carrier.

The acoustic sensor 110 and the logic circuit 120 can be arranged as two separate components on the carrier 210 according to an example (as shown in Fig. 2). However, it is also possible that the acoustic sensor 110 and the logic circuit 120 are integrated in a common component, e.g. monolithically.

The electronic shutdown device 200 may comprise other components which can be arranged on the carrier 210, e.g. a port 220. The port 220 can be used to supply the electronic shutdown device 200 with voltage. However, it is also possible for the electronic shutdown device 200 to comprise an internal power source such as a battery instead of or in addition to the port 220.

The electronic shutdown device 200 can be configured to be installed in the device to be shut down. For example, the device to be shut down (e.g. a cooker) may comprise control electronics and the electronic shutdown device 200 may be part of the control electronics. However, it is also possible that the electronic shutdown device 200 is not part of the control electronics of the device to be shut down and can be installed as an independent component in the device to be shut down.

According to another example, the electronic shutdown device 200 is not configured to be installed in the device to be shut down. Instead, the electronic shutdown device 200 may be configured to be arranged between an electrical power plug or power connection of the device to be shut down and a power supply or a socket or in a socket or in an electrical fuse or on a valve.

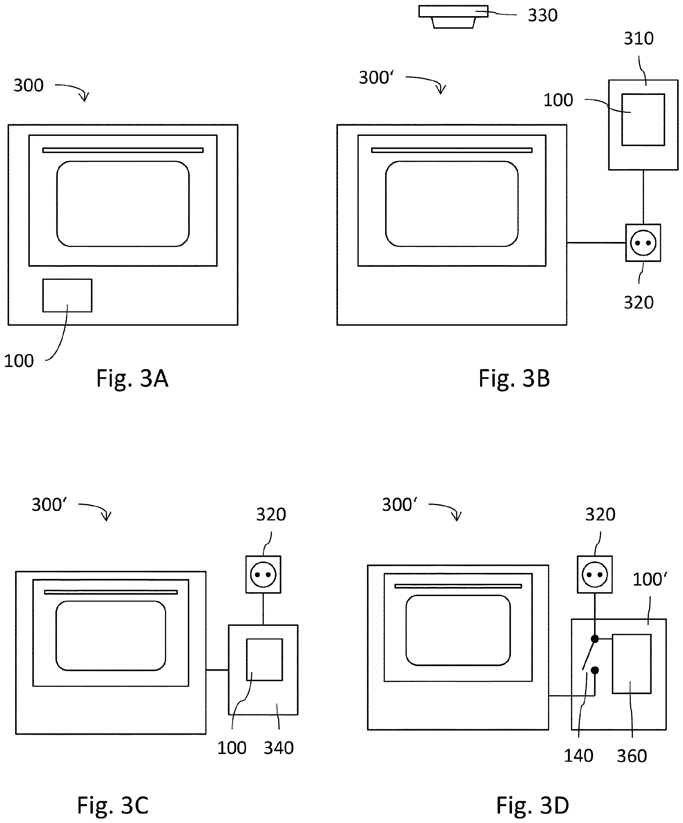

Figures 3A to 3C show examples of different ways in which the electronic shutdown device 100 or 200 and a device to be shut down can be arranged in relation to each other.

Figure 3A shows an example of how the electronic shutdown device 100 or 100' (or 200) is integrated into the device 300 to be shut down.

For example, the device 300 may be designed so that the electronic shutdown device 100 is built into it at the time of manufacture. However, it is also possible that the device 300 and/or the electronic shutdown device 100 are designed so that the device 300 is retrofitted with the electronic shutdown device 100.

Figure 3B shows an example wherein the electronic shutdown device 100 or 100' is not integrated into the device to be shut down 300', but is integrated into an external fuse 310. The external fuse 310 can be a fuse box, for example.

The device to be shut down 300' can be connected to a power connection 320, which is protected by the external fuse 310. In the event that the electronic shutdown device detects an acoustic signal from a signaling device 330 and issues a shutdown signal, the power connection 320 is disconnected from the mains by the external fuse 310, thus disconnecting the 300' unit.

Figure 3C shows another example wherein the electronic shutdown device 100 or 100' is arranged outside the device 300'.

In the case of Fig. 3C, the electronic shutdown device 100 may be configured to be placed between the device 300' and the power connection 320. The electronic shutdown device 100 may be configured to be part of an intermediate device 340 arranged between the device 300' and the power supply 320.

The intermediate device 340 may be, for example, an intermediate plug or a multiple plug, wherein a power plug of the device 300' is connected to the intermediate plug or multiple plug, which in turn is connected to the 320 power connection.

Figure 3D shows another example wherein the device 300' is connected to the electronic shutdown device 100'. The electronic shutdown device 100' has a switch 140, which may be configured to disconnect or connect the device 300' to the power supply 320. The electronic shutdown device 100' may also include other components 360, e.g. the acoustic sensor 110, logic circuit 120 and trigger 130. The switch 140 may be configured to be operated manually or to automatically disconnect (e.g. when the shutdown signal is output by the trigger 130) or to reconnect the device 300' to the power supply 320.

The examples shown in Figures 3B to 3D may have the advantage that the device 300' does not need to be equipped or retrofitted with the electronic shutdown device 100 or 100'. For example, for reasons of space or cost, it may not be possible or practical to integrate the electronic shutdown device 100 or 100' into the 300' device. The example shown in Fig. 3A, in turn, may have the advantage that the electronic shutdown device 100 or 100' is ready for use in the device 300' without the need for further steps such as installation into the external fuse 310 or use of the intermediate device 340.

According to the examples shown in Figures 3B to 3D, the device to be shut down 300' is connected to a power connection 320. However, in another example, this connection can also be a gas or oil connection. In another example, the connection may be connection regulated by a valve.

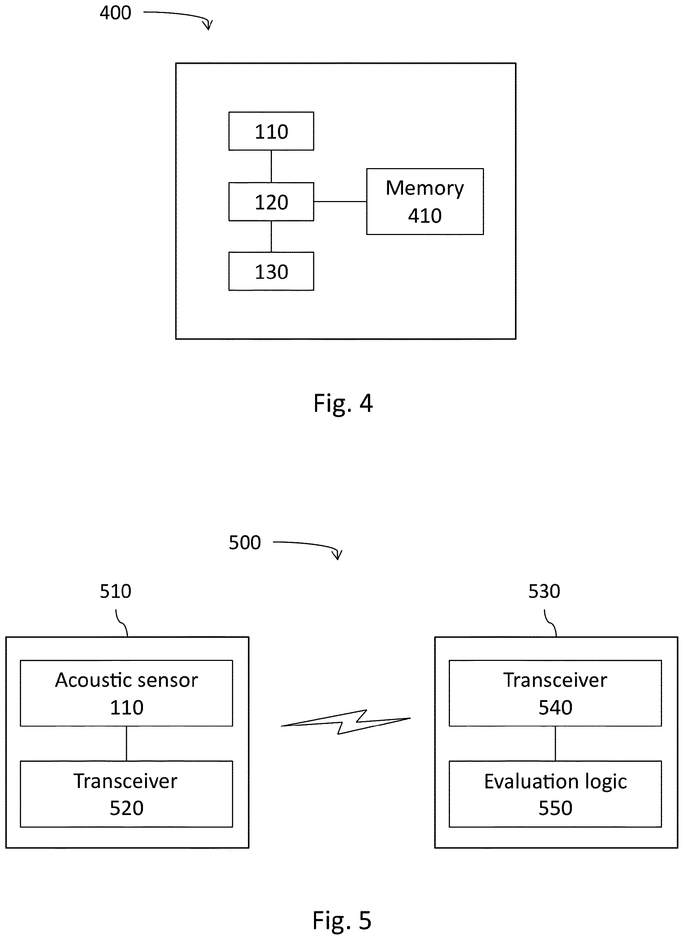

Figure 4 shows another electronic shutdown device 400, which may be similar to or identical with the electronic shutdown devices 100, 100' and 200, except for the differences described below.

The electronic shutdown device 400 comprises the acoustic sensor 110, the logic circuit 120 and the trigger 130, and also a memory 410. The memory 410 can, for example, be connected to the logic circuit 120.

According to an example, the memory 410 can be arranged on the carrier 210 together with the acoustic sensor 110, the logic circuit 120 and the trigger 130 (see Fig. 2). The memory 410 can, for example, be connected to the logic circuit 120 via the carrier 210.

The memory 410 can be any suitable type of memory and it can be configured to provide read-only access or the memory 410 can provide both read and write access.

Memory 410 may be configured to store characteristics of acoustic signals from signaling devices. These characteristics can, for example, be determined in advance and loaded into memory 410 during the manufacture of the electronic shutdown device 400. However, it is also possible that the electronic shutdown device 400 is configured to be trained for the acoustic signals of signaling devices. For example, the electronic shutdown device 400 may be configured to be trained on the acoustic signals of a specific signaling device used in the household. It is also possible that the electronic shutdown device 400 is configured to receive an update at a later date, which may include new characteristics.

The logic circuit 120 can be configured to decide whether a signal detected by the acoustic sensor 110 has the characteristics. For this purpose, the logic circuit 120 can be configured to access the memory 410 and compare a detected signal with the stored characteristics.

According to an example, the characteristics can include a sound frequency range and/or a signal duration and/or a volume. For example, the sound frequency range may cover the range audible to humans and it may cover 2.5kHz or more, in particular 2.5kHz to 4kHz. The signal duration may be e.g. Is or more, 2s or more, 3s or more and/or it may be a periodically recurring tone. The volume can be e.g. 80dB or more or even 90dB or more.

According to an example, a detected signal that has some or all of the characteristics can be identified by the logic circuit 120 as an acoustic signal from a signaling device.

Figure 5 shows another example of an electronic shutdown device 500, which may be similar to or identical with the electronic shutdown devices 100, 100', 200 and 400, except for the differences described below.

The electronic shutdown device 500 comprises a first unit 510 which comprises an acoustic sensor 110 and a transceiver 520. The first unit 510 may be configured to be integrated into a device to be shut down. For example, the first unit 510 may include a semiconductor module with a carrier 210 as shown in Fig. 2.

The first unit 510 may be configured to detect an acoustic signal from a signaling device by means of the acoustic sensor 110 and to transmit data on the acoustic signal wirelessly to a second unit 530 of the electronic shutdown device 500 by means of the transceiver 520. The wireless transmission can, for example, be in accordance with a WLAN or Bluetooth standard. According to another configuration, the data can be transmitted by means of a wired transmission, such as by so-called powerline communication.

The second unit 530 can comprise a further transceiver 540 and an evaluation logic 550. The transceiver 540 can be configured to receive the data on the acoustic signal and the evaluation logic 550 can be configured to distinguish an acoustic signal of a signaling device from other sounds. The evaluation logic 550 can be designed similar to or identical with the logic circuit 110.

00112] The second unit 530 can be a central unit configured to communicate with several first units 510. According to an example, the second unit 530 can be arranged in a building, a household, a flat, a factory, an industrial plant, a tunnel, a tent, etc. together with the first unit(s) 510. According to another example, the second unit 530 may not be housed in the household, but may be provided by a supplier. In this case, the second unit 530 can be in communication with first units 510 of a variety of households, buildings, apartments, factories, industrial plants, tunnels, tents, etc., e.g. via the Internet. The second unit 530 can also be partially or completely implemented by software and can use transceiver devices of internet access points instead of the transceiver 540.

In case the evaluation logic 550 detects an acoustic signal of a signaling device, the second unit 530 can send a shutdown signal to the first unit 510.

According to an example, it is also possible that the first unit does not comprise a transceiver 520, but only a transmitter. In this case, the electronic shutdown device 500 may contain an additional unit comprising a receiver and a switch for disconnecting the power supply or fuel supply. According to another design, the switch may be configured to be operable independently of the receiver, for example by manual operation. The switch may, for example, be designed as a half-conductor switch. Preferably, the semiconductor switch can be based on semiconductor materials such as GaN, SiC, Si, or semiconductor technologies such as MOSFET, IGBT, bipolar technologies, etc.

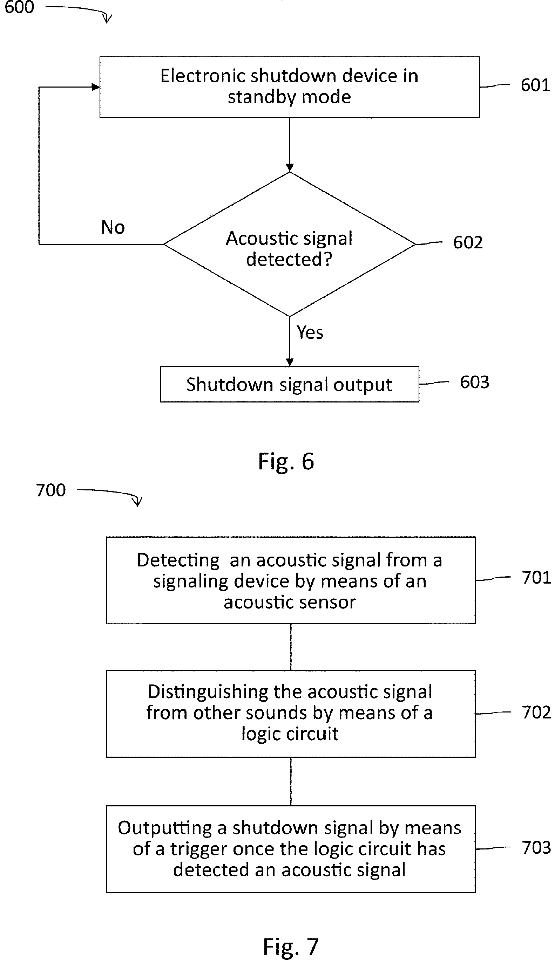

Figure 6 shows an operating sequence 600 of an electronic shutdown device (e.g. an electronic shutdown device 100, 100', 200, 400 or 500) according to an example.

At 601, the electronic shutdown device is in standby mode. At 602, for example a logic circuit of the electronic shutdown device decides whether an acoustic signal from a signaling device has been detected. This may involve the logic circuit identifying a received sound as such an acoustic signal or as some other sound.

If no acoustic signal from a sensor is detected, the electronic shutdown device remains in standby mode. However, if an acoustic signal from a sensor is detected, a shutdown signal is output at 603.

Figure 7 is a flowchart of a method 700 for shutting down a device. Method 700 can be carried out, for example, by means of one of the electronic shutdown devices 100, 100', 200, 400 or 500.

Method 700 comprises at 701 detecting an acoustic signal from a signaling device by means of an acoustic sensor, at 702 distinguishing the acoustic signal from other sounds by means of a logic circuit, and at 703 outputting a shutdown signal by means of a trigger once the logic circuit has detected an acoustic signal.

According to an example, method 700 may further comprise a filtering of sounds received by the acoustic sensor to analyze a certain frequency range and/or a certain minimum volume of the received sounds by means of the logic circuit. Method 700 may further comprise storing characteristics of acoustic signals from signaling devices in a memory, and determining by means of the logic circuit whether a signal detected by the acoustic sensor comprises the characteristics.

### EXAMPLES

In the following, the electronic shutdown device and the method for shutting down a device are explained in more detail using explicit examples.
Example 1 is an electronic shutdown device comprising: an acoustic sensor configured to detect an acoustic signal from a signaling device, a logic circuit configured to distinguish the acoustic signal from other sounds, and a trigger configured to output a shutdown signal once the logic circuit has detected the acoustic signal.
Example 2 is the electronic shutdown device according to example 1, the electronic shutdown device being configured to be installed in the device to be shutdown.
Example 3 is the electronic shutdown device of example 1, wherein the electronic shutdown device may be arranged between a power connection of the device to be shut down and a power supply or a socket or in the socket or in an electric fuse or on a valve.
Example 4 is the electronic shutdown device according to one of the previous examples, wherein the shutdown signal can switch off the shutdown device.
Example 5 is the electronic shutdown device of any one of the preceding examples, further comprising: a switch capable of actuating a turn-on or turn-off of the shutdown device.
Example 6 is the electronic shutdown device of example 5, wherein the switch is user-controlled or timer-controlled.
Example 7 is the electronic shutdown device of any one of the preceding examples, further comprising: a memory configured to store characteristics of acoustic signals from signaling devices, wherein the logic circuit is configured to decide whether a signal detected by the acoustic sensor has the characteristics.
Example 8 is the electronic shutdown device according to example 7, wherein the characteristics comprise an acoustic frequency range and/or a signal duration and/or a volume.
Example 9 is the electronic shutdown device of example 1, wherein the electronic shutdown device is configured to be powered by the device to be shut down.
Example 10 is the electronic shutdown device according to one of the previous examples, wherein all components of the electronic shutdown device are arranged on a common carrier.
Example 11 is the electronic shutdown device according to example 10, wherein the common carrier is a printed circuit board.
Example 12 is an electrical device comprising: an electrical connection for connecting the device to be shut down to a power supply; and an electronic shutdown device of example 1.
Example 13 is the electrical device of Example 12, wherein the apparatus to be shut down is a device for generating heat.
Example 14 is the electrical device according to example 13, wherein the device is a cooker, toaster, oven, microwave, radiant heater or valve.
Example 15 is a method of shutting down a device, the method comprising: detecting an acoustic signal from a signaling device by means of an acoustic sensor, distinguishing the acoustic signal from other sounds by means of a logic circuit, and outputting a shutdown signal by means of a trigger once the logic circuit has detected an acoustic signal.
Example 16 is the method according to example 15, where the acoustic sensor, the logic circuit and the trigger are built into the device to be shut down.
Example 17 is the method of example 15 or 16, further comprising: filtering sounds received by the acoustic sensor to analyze a specific frequency range and/or a specific minimum volume of the received sounds by means of the logic circuit.
Example 18 is the method according to one of examples 15 to 17, further comprising: storing characteristics of acoustic signals from signaling devices in a memory; and determining by means of the logic circuit whether a signal detected by the acoustic sensor has the characteristics.
Example 19 is the method according to one of examples 15 to 18, further comprising: wireless or wired communication of data on the acoustic signal to an evaluation unit, evaluation of the data in the evaluation unit, and wireless or wired communication of a command to the trigger to output the shutdown signal.
Example 20 is the method according to one of examples 15 to 19, further comprising: supplying the acoustic sensor, the logic circuit and the trigger with voltage from a power supply.

Although specific examples have been presented and described herein, it is obvious to the person skilled in the art that a variety of alternative and/or equivalent implementations can replace the specific examples presented and described, without deviating from the scope of this disclosure. This application is intended to cover any adaptations or variations of the specific examples discussed herein. It is therefore intended that this disclosure is limited only by the claims and their equivalents.

## Claims

1. An electronic shutdown device comprising:
an acoustic sensor configured to detect a warning sound of a signaling device,
a logic circuit configured to distinguish the warning sound from other sounds, and
a trigger configured to output a shutdown signal once the logic circuit has detected the warning sound.

2. The electronic shutdown device of claim 1, wherein the electronic shutdown device is configured to be installed in the device that is to be shut down.

3. The electronic shutdown device of claim 1, wherein the electronic shutdown device can be arranged between an electrical power connection of the device to be shut down and a power supply or a socket or in the socket or in an electrical fuse or on a valve.

4. The electronic shutdown device of any one of the preceding claims, wherein the shutdown signal can turn off the shutdown device.

5. The electronic shutdown device of any one of the preceding claims, further comprising:
a switch capable of actuating a turn-on or a turn-off of the shutdown device, and
wherein the switch is user controlled or time controlled.

6. The electronic shutdown device of any one of the preceding claims, further comprising:
a memory configured to store characteristics of warning sounds of signaling devices,
wherein the logic circuit is configured to decide whether a signal detected by the acoustic sensor has the characteristics, and
wherein the characteristics comprise a sound frequency range and/or a signal duration and/or a volume.

7. The electronic shutdown device of claim 1, wherein the electronic shutdown device is configured to be supplied with power by the device that is to be shut down.

8. The electronic shutdown device of any one of the preceding claims, wherein all components of the electronic shutdown device are arranged on a common carrier, and
wherein the common carrier is a printed circuit board.

9. An electrical device comprising:
an electrical connection for connecting the device to be shut down to a power supply, and
an electronic shutdown device of claim 1.

10. The electrical device of claim 9, wherein the device to be shut down is a device for generating heat.

11. A method for shutting down a device, the method comprising:
detecting by means of an acoustic sensor a warning sound of a signaling device,
distinguishing by means of a logic circuit the warning sound from other sounds, and
outputting by means of a trigger a shutdown signal once the logic circuit has detected a warning sound.

12. The method of claim 11, further comprising:
user-controlled shutting down of the device in the presence of the shutdown signal.

13. The method of claim 11 or 12, further comprising
filtering of sounds received by the acoustic sensor in order to analyze by means of the logic circuit a certain frequency range and/or a certain minimum volume of the received sounds.

14. The method of any one of claims 11 to 13, further comprising:
wireless or wired communication of data about the warning sound to an evaluation unit,
evaluating the data in the evaluation unit, and
wireless or wired communication to the trigger of a command to output the shutdown signal.

15. The method of any one of claims 11 to 14, further comprising:
supplying the acoustic sensor, the logic circuit and the trigger with voltage from a power supply.
